# EUROPÄISCHE PATENTSCHRIFT

(11) **EP 3 408 078 B1**
(45) Veröffentlichungstag und Bekanntmachung des Hinweises auf die Patenterteilung: **22.09.2021**
(21) Anmeldenummer: 16797447.6
(22) Anmeldetag: 13.10.2016
(51) Int. Cl.: B29D 30/06

(54) **VERFAHREN UND VORRICHTUNG ZUR NACHBEHANDLUNG VON REIFEN**
METHOD AND DEVICE FOR POST-TREATING TYRES
PROCÉDÉ ET DISPOSITIF PERMETTANT DE SOUMETTRE DES PNEUMATIQUES À UN TRAITEMENT ULTÉRIEUR

(30) Priorität: 26.01.2016 DE 102016000959
(43) Veröffentlichungstag der Anmeldung: 05.12.2018
(73) Patentinhaber: Harburg-Freudenberger Maschinenbau GmbH, 21079 Hamburg (DE)
(72) Erfinder: MEINCKE, Ruediger, 22547 Hamburg (DE); NOWOK, Martin, 21108 Hamburg (DE)
(74) Vertreter: Klickow & Wetzel PartGmbB
(86) Internationale Anmeldenummer: PCT/DE2016/000372
(87) Internationale Veröffentlichungsnummer: WO 2017/129156

(56) Entgegenhaltungen:
- EP-A1- 0 468 343
- EP-A1- 0 468 344
- EP-A1- 0 638 409
- WO-A1-2007/079723
- DE-A1-102009 003 447
- DE-A1-102014 001 644
- JP-A- H06 238 669
- JP-A- H11 254 445
- JP-A- 2006 167 932
- JP-A- 2008 155 567
- US-A- 2 340 264

## Beschreibung

Die Erfindung betrifft ein Verfahren und eine Vorrichtung zur Nachbehandlung von Reifen nach einem Vulkanisierungsprozess, die eine langsame und/oder schnelle Abkühlung des restwärmebehafteten Fertigreifens unter optional anwendbarem Reifeninnendruck durch ein Stützgas unterstützt.

Einer der wesentlichen Produktionsschritte zur Herstellung von Reifen ist das Vulkanisieren von Reifenrohlingen. Dazu wird der Reifenrohling in eine Form eingelegt, die sich innerhalb einer Reifenvulkanisiermaschine befindet und anschließend auf die materialabhängige Vulkanisiertemperatur erwärmt sowie mit einem Vulkanisierdruck innenseitig des Reifenrohlings beaufschlagt. Um die Vulkanisiertemperatur und den Vulkanisierdruck zu erreichen, wird ein geeignetes Heizmedium mit einer entsprechenden Temperatur und unter Druckbeaufschlagung in den Innenraum des Reifenrohlings eingebracht. Üblicherweise wird der Reifenrohling innerhalb der Form derart durch eine Vorrichtung festgelegt, dass innerhalb des Reifenrohlings eine weitgehend druckdichte Kammer gebildet ist.

Bereits der Reifenrohling, aber auch der fertige Reifen als Endprodukt des Reifenherstellungsprozesses ist ein hochkomplexes und aus vielen Halbzeugelementen bestehendes Bauteil. Infolge des vielschichtigen Aufbaus und der daraus resultierenden unterschiedlichen Wanddicken ergeben sich für die Einbringung der Vulkanisiertemperatur sowie die Abkühlung des Fertigreifens nach der Vulkanisierung besondere Anforderungen.

Zur Durchführung einer Vulkanisierung des elastomeren Materials muss eine beträchtliche Wärmeenergiemenge in das Material eingebracht werden. Die Prozesszeit wird hierbei durch dickere Materialbereiche bestimmt, da hier ein längerer Zeitbedarf für die Einbringung einer ausreichenden Wärmeenergiemenge besteht.

Besonders dicke Bereiche des Reifenrohlings sind die Laufflächen. Relativ dünn sind die Seitenwandungen ausgebildet. Ursächlich für diesen deutlichen Dickenunterschied sind die im Bereich der Lauffläche angeordneten zusätzlichen Reifenkomponenten wie Stahlgürtel, Gürtelabdecklage und die im Vergleich zur Seitenwandung erheblich dickere Gummi-/Kautschukschicht. Diese erheblich dickere Gummi-/Kautschukschicht weist nicht zuletzt deshalb mehr Wanddicke auf, weil sie das eigentliche Reifenprofil umfasst, das während des Vulkanisierprozesses hergestellt wird. Dazu muss der Laufflächenbereich bzw. die dort vorgesehene dickwandige Gummi-/Kautschukmasse soweit erhitzt werden, dass sie plastisch fließen kann und durch den Vulkanisationsdruck in die Profil-Negativmatrize der Reifenrohlingsform der Reifenvulkanisiermaschine gepresst werden kann.

Grundsätzlich hat die Vulkanisation das Ziel, einen Reifenrohling durch Temperatur- und Druckbeaufschlagung innerhalb einer oder mehrerer Zeitintervalle formstabil zu heizen, d.h. die Komponenten des Reifenrohlings miteinander zu verbinden und den Basismaterialien sowie der Gummi-/Kautschukschicht durch Vernetzungsprozesse elastische Eigenschaften einzuprägen. Dazu sind neben der eigentlichen Druck- und Temperaturbeaufschlagung weiterhin unterschiedliche, auf den Basiswerkstoff abgestimmte Additivsubstanzen für die Vernetzung und ggf. die Vernetzungsbeschleunigung erforderlich. Geeignete Vernetzungssubstanzen können beispielsweise Dischwefeldichlorid (Schwefelvulkanisation insbesondere bei Naturkautschuk), Peroxide oder Metalloxide sein, Zusätze basierend z. B. auf Mercaptobenzthiazol oder Zinkdithiophosphat eignen sich zur Vernetzungsbeschleunigung.

Nach dem Vulkanisierungsprozess wird der zum Fertigreifen vulkanisierte Reifenrohling aus der Reifenvulkanisiermaschine entnommen. Die Entnahme wird zu einem möglichst frühen Zeitpunkt nach dem Vulkanisierungsprozess angestrebt, um die Reifenvulkanisiermaschine mit einem neuen zu vulkanisierenden Reifenrohling bestücken zu können und auf diese Weise die Prozesszykluszeiten zu reduzieren und, oder die Ausbringung der Maschine zu erhöhen bzw. zu maximieren.

Zwangsläufiges Resultat dieser möglichst frühen Entnahme des Reifens nach dem Vulkanisierungsprozess ist, dass der Fertigreifen noch nicht oder nicht vollständig abgekühlt ist und infolge der zuvor eingebrachten erheblichen Wärmeenergiemengen für den Vulkanisierungsprozess eine hohe Temperatur aufweist. Diese sogenannte Restwärme kann in Reifentemperaturen resultieren, die über 100 GradC liegen. Je nach Reifentyp und Material sind Reifenrestwärmen bei der Entnahme aus der Reifenvulkanisiermaschine von ca. 160 GradC möglich, teilweise auch höher. Das bedeutet in der Praxis, dass die Reifenvulkanisationstemperatur Tvulk vielfach bei 150 bis 190 GradC liegt, bevorzugt bei 160 bis 180 GradC. Die Reifenrestwärme Trest bei oder nach der Entnahme des Fertigreifens aus der Reifenvulkanisiermaschine entspricht in der Regel der Tvulk minus 0 bis 10%.

Je nach Reifentyp, Verwendungszweck und den Materialeigenschaften sowie Wanddicken des Fertigreifens kann es erforderlich sein, dass der aus der Reifenvulkanisiermaschine entnommene Fertigreifen einer Nachbehandlung in einem Reifennachbehandler unterzogen wird. Insbesondere um sehr enge Abmessungstoleranzen und/oder Rundlaufgenauigkeiten zu erzielen kann die Abkühlung des entnommenen Fertigreifens unter einem anliegenden Innendruck erforderlich sein. Dazu wird der noch Restwärme enthaltende Fertigreifen in einer Reifennachbehandlungsvorrichtung, einem sogenannten Post Cure Inflator (PCI) aufgenommen, mit einem Überdruck in Form eines Stützgases innenseitig beaufschlagt. Das Stützgas ist vorzugsweise eine Pressluft mit einem Überdruck von bis zu 0,5 MPa.

Häufig werden so genaue Reifenabmessungstoleranzen, Rundlaufeigenschaften und/oder Wuchtungsgenauigkeiten, meist vorgegeben durch hohe Uniformity-Werte, nicht erreicht, ohne dass eine Nachbehandlung im PCI der Fertigreifen diese Anforderungen erfüllt, um damit einen Ausschuss zu verhindern.

Eine weitere Maßnahme im Zusammenhang mit der Nachbehandlung von fertigvulkanisierten Reifen nach der Entnahme aus der Form der Reifenvulkanisiermaschine ist die Abkühlung, um die Reifenrestwärme möglichst zu entfernen, d.h. den Fertigreifen auf Raumtemperatur zu kühlen.

Die Abkühlung hat das Absenken der Reifenrestwärme auf Umgebungstemperaturniveau zum Ziel und wird vorzugsweise in einem zusammenhängenden Prozessschritt realisiert, der einer Zeitdauer von ein bis zwei Heizzyklen der Reifenvulkanisiermaschine entspricht.

Moderne Reifenkonstruktionen und deren Werkstoffe sowie die geometrischen Abmessungen, insbesondere Wanddicken und Wanddickensprünge, erfordern in zunehmendem Umfang Reifennachbehandlungsmaßnahmen, die sich an einer gesteuerten langsameren Abkühlung des restwärmebehafteten Fertigreifens orientieren. Die bisherigen Nachbehandlungen mit dem Ziel einer schnelleren Abkühlung können vielfach nicht ausreichen und/oder nachteilig sein für den Fertigreifen hinsichtlich Qualität, Abmessungsgenauigkeiten und Werkstoffeigenschschaften sowie der Vernetzung bzw. der unerwünschten Reversion. Auch der Umweltschutzaspekt und die damit zusammenhängende primäre Forderung nach Energieeinsparung und/oder effizienter Energieausnutzung kann mit bekannten Reifennachbehandlungsvorrichtungen nicht in ausreichendem Maß unterstützt werden.

Aus dem Stand der Technik sind bereits verschiedene Verfahren und Vorrichtungen zur Nachbehandlung von Reifen bekannt.

Die Schrift EP 0 468 343 A1 offenbart ein Verfahren und einer Vorrichtung zur Stabilisation von bei relativ hohen Temperaturen aus der Form einer Heizpresse entnommenen vulkanisierten Reifen, die Vorrichtung aufweisend einen PCI sowie ein geschlossenes Leitungssystem zur Zirkulation eines druckbeaufschlagten Fluids, wobei das geschlossene Leitungssystem außerhalb des Reifens Radiatoren aufweist, über die mithilfe des Fluids vom Reifen aufgenommene Wärme abgegeben werden kann. Das Innere des Reifens ist dabei ein Teil des geschlossenen Leitungssystems.

In dem Dokument JP 2006 167932 A sind ein Verfahren und eine Vorrichtung zur Nachbehandlung vulkanisierter Reifen unter der Verwendung einer elektromagnetischen dielektrischen Heizung offenbart, wobei die in den Metallteilen des Reifens induzierten Ströme den Reifen von innen heraus heizen. Weiterhin wird die Verwendung eines PCI in Verbindung mit der elektromagnetischen dielektrischen Heizung gelehrt.

Die Schrift JP H06 238669 A offenbart ein Verfahren und eine Vorrichtung zur Nachbehandlung von auf Basis einer Arrhenius Gleichung zu etwa 50-60% der objektiven Vulkanisationsmenge vulkanisierten Reifen unter der Verwendung eines PCI. Eine Heizbox wird über den auf einem rotierenden PCI gehalterten und mit wenig Druck beaufschlagten Reifen geschoben und dieser wird dort fertig vulkanisiert. Anschließend wird eine Kühlbox zur Abkühlung des vulkanisierten Reifens über den Reifen geschoben.

Es ist Aufgabe der Erfindung, eine Vorrichtung zur Reifennachbehandlung im Anschluss eines Reifenvulkanisierungsprozesses bereitzustellen, um die genannten Nachteile wenigstens teilweise zu reduzieren und eine Lösung für neue Qualitätsanforderungen bereitzustellen.

Die erfindungsgemäße Lehre erkennt, dass die Reifenqualität und/oder Energieeffizienz durch eine langsame, insbesondere schrittweise gesteuerte bzw. kontrollierte Abkühlung des restwärmebehafteten Fertigreifens auf Raumtemperatur verbessert werden kann. Wahlweise ist vorgesehen, die PCI-Prozessschritte zumindest teilweise mit den Prozessschritten der langsamen, insbesondere schrittweise gesteuerten bzw. kontrollierten Abkühlung des restwärmebehafteten Fertigreifens auf Raumtemperatur zu kombinieren.

Unter langsamer kontrollierter Abkühlung im Sinn der Erfindung wird eine Abkühlung in wenigstens zwei Heizzyklen mit mindestens 20 Minuten verstanden, durchgeführt mittels

Schritt 1: durch Abkühlung des restwärmebehafteten Fertigreifens auf ein gesteuertes Temperaturniveau zwischen Vulkanisationstemperatur und Umgebungstemperatur, d.h. einer Zwischentemperatur Tzw in einer erfindungsgemäßen isolierten Kammer im Zeitraum von ca. zwei Heizzyklen der Reifenvulkanisiermaschine.

Es ist möglich, die langsame kontrollierte Abkühlung durch eine normale Abkühlung zu ergänzen mittels

Schritt 2: durch Abkühlung des Fertigreifens vom Zwischentemperaturniveau Tzw auf Abfördertemperatur durch normale Kühlung der Umgebung für mindestens einen Heizzyklus.

Schritt 1 der langsamen Abkühlung innerhalb der isolierten Kammer kann vorzugsweise als gesteuerte bzw. kontrollierte Abkühlung realisiert werden, wobei die den zu kühlenden Fertigreifen umgebende isolierte Kammer insbesondere ein Klima ohne störende Einflüsse einer Umgebungslufttemperatur und/oder der Luftgeschwindigkeit aus der Umgebung, beispielsweise infolge einer Hallenbelüftung zu verschiedenen Jahreszeiten und/oder höhere Luftgeschwindigkeiten beispielsweise durch Zugluft an offene Hallentoren schafft.

Konstruktiv wird vorgeschlagen, die Reifennachbehandlungsvorrichtung in Form eines Post Cure Inflators (PCI) weiterzuentwickeln und mit gekapselten Kammern mit isolierenden Eigenschaften für die Aufnahme des restwärmebehafteten Fertigreifens zu versehen. Die gekapselten Kammern sind derart konstruiert, dass sie ein langsames oder gesteuertes Auskühlen des Fertigreifens vom Restwärmeniveau auf eine Zwischentemperatur realisieren. Die Kammern sind vorzugsweise mehrteilig ausgeführt und können geöffnet und geschlossen werden, um beschick- und entleerbar zu sein. Diese neuartige Abkühlungstechnik für restwärmebehaftete Fertigreifen wird Post Cure Device (PCD) genannt und unterstützt insbesondere die Kombination mit dem PCI.

Durch den Einsatz von PCD lassen sich wenigstens teilweise Vorteile und Verbesserungen erzielen hinsichtlich Verkürzung der Vulkanisationszeit, Verbesserung der Reifenqualität, Steigerung der Abmessungsgenauigkeiten und Werkstoffeigenschschaften, Vernetzungsgrad des Kautschukwerkstoffes und Unterdrückung bzw. Reduzierung unerwünschter Reversionsprozesse und die wenigstens teilweise Ausnutzung der Restwärme als Energiequelle.

In den Zeichnungen sind Ausführungsbeispiele der Erfindung dargestellt. Es zeigen:
- Fig. 1: eine dreidimensionale Ansicht auf ein Ausführungsbeispiel der erfindungsgemäßen Vorrichtung zur Nachbehandlung von Reifen mit einem PCI und einem PCD, wobei die obere Isolierkammer zur Aufnahme wenigstens eines Reifens in ihrem Innenraum in der Geschlossenstellung abgebildet ist,
- Fig. 2: eine dreidimensionale Ansicht auf ein Ausführungsbeispiel der erfindungsgemäßen Vorrichtung zur Nachbehandlung von Reifen mit einem PCI und einem PCD mit der Isolierkammer in der Geöffnetstellung,
- Fig. 3: eine perspektivische Abbildung auf einen Ausschnitt der erfindungsgemäßen Vorrichtung zur Nachbehandlung von Reifenmit einer außermittig und achsparallel angeordneten Verfahreinrichtung der Isolierkammer,
- Fig. 4: eine dreidimensionale Ansicht auf ein Ausführungsbeispiel der erfindungsgemäßen Vorrichtung zur Nachbehandlung von Reifen mit zwei PCI und zwei PCD, wobei die jeweils enthaltenen Isolierkammer zur Aufnahme wenigstens eines Reifens im oberen Fall geöffnet, um unteren Fall geschlossen ist,
- Fig. 5: in perspektivischer Ansicht die Vorrichtung zur Nachbehandlung von Reifen in der Geöffnetsituation der Isolierkammer des PCD mit einem Fertigreifen,
- Fig. 6: die Situation analog zu Figur 5 mit einem in der Kammer abgelegten Fertigreifen,
- Fig. 7: die Position des abgesenkten ersten Kammerelementes,
- Fig. 8: das dritte Kammerelement in einer gegenüber Figur 7 teilweise verschobenen Position in Richtung der Geschlossenstellung der Isolierkammer und
- Fig. 9: in perspektivischer Ansicht die Vorrichtung zur Nachbehandlung von Reifen in der Geschlossenstellung der Isolierkammer des PCD.

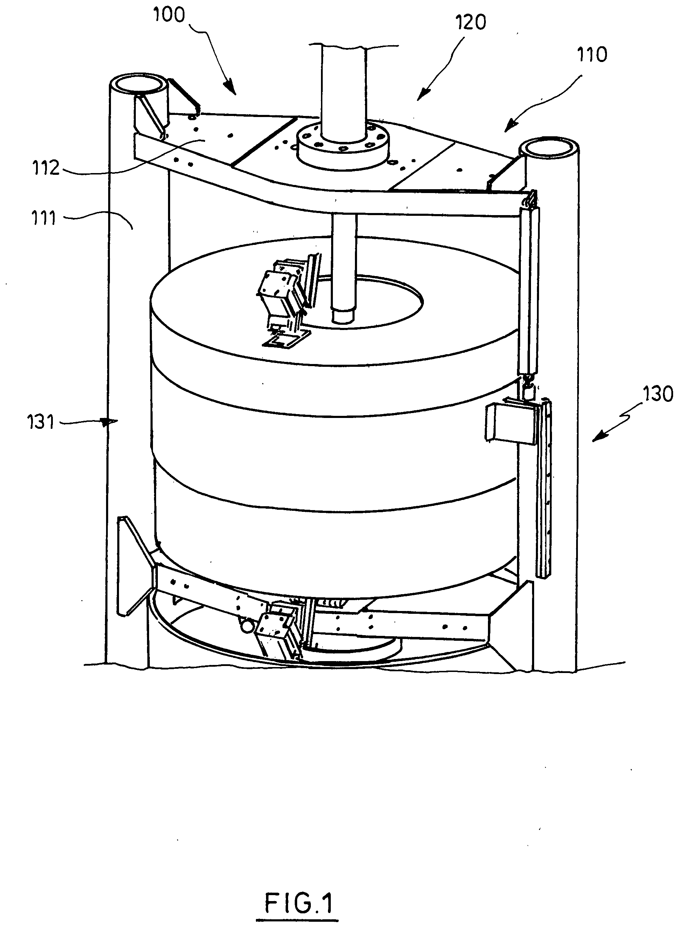

Figur 1 zeigt eine dreidimensionale Ansicht auf ein Ausführungsbeispiel der erfindungsgemäßen Vorrichtung zur Nachbehandlung von Reifen (100) mit einem PCI (120) und einem PCD (130). Primärer Bestandteil des PCD (130) ist eine in Figur 1 geschlossen dargestellte obere Isolierkammer (131) mit topfförmiger Gestalt, in deren Innenraum wenigstens ein Fertigreifen (200) aufnehmbar ist. Die Vorrichtung zur Nachbehandlung von Reifen (100) verfügt vorzugsweise durch einen Rahmenaufbau (110) gebildet durch eine Säule (111) mit wenigstens einem Ausleger (112) oder wenigstens zwei Säulen (111) mit wenigstens einer Traverse (112).

Die wesentlichen Bauelemente des PCI (120) umfassen wenigstens Mittel zum Spannen und Abdichten des Reifens (200) vorzugsweise an seinen Wulsten sowie Vorrichtungsteile zur Druckbeaufschlagung des Reifeninnenraums und sind innerhalb der Isolierkammer (131) angeordnet.
Sowohl die Ausführung der Vorrichtung zur Nachbehandlung von Reifen (100) mit einer Säule (111) und Ausleger (112) als auch mit wenigstens zwei Säulen (111) und Traverse (112) bietet Vor- und Nachteile. Die Ausführung mit einer Säule (111) und Ausleger (112) unterstützt eine radiale Zugänglichkeit von PCI (120) und PCD (130) von nahezu 360 Grad, ist aber weniger verformungssteif. Die Ausführung mit wenigstens zwei Säulen (111) und Traverse (112) unterstützt einen sehr verformungsarmen und stabilen Aufbau, bietet aber geringere radiale Zugänglichkeit zum PCI (120) und PCD (130).

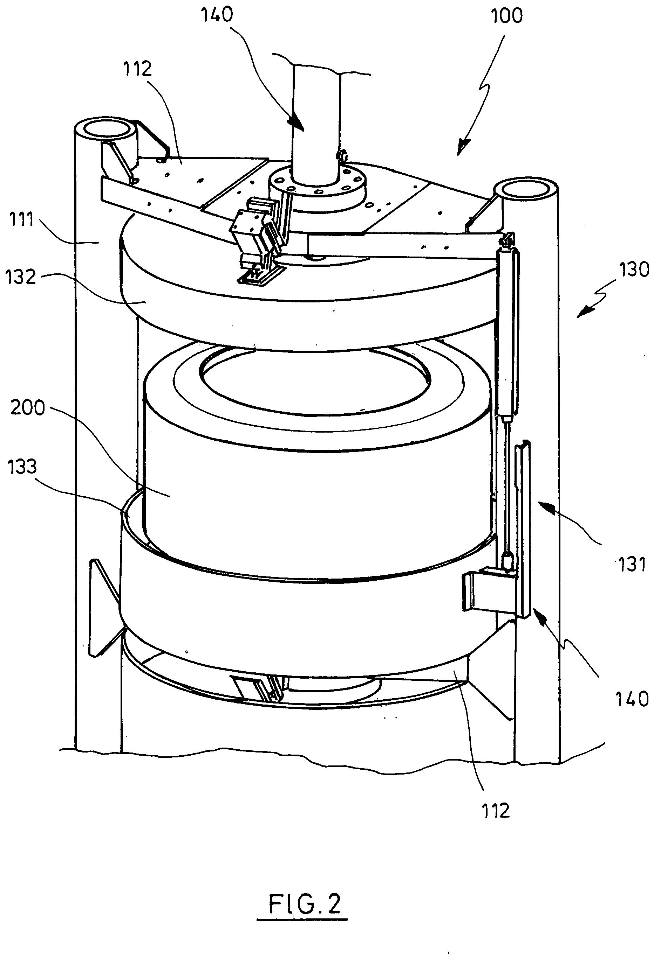

Figur 2 zeigt eine dreidimensionale Ansicht auf die obere Vorrichtung zur Nachbehandlung von Reifen (100) mit einem PCI (120) und einem PCD (130). Die Isolierkammer (131) ist durch wenigstens ein erstes Kammerelement (132) und ein zweites Kammerelement (133) aufgebaut und vorzugsweise axiallinear zueinander verschiebbar, sodass der Kammerinnenraum für ein Beladen oder Entladen mit wenigstens einem Reifen (200) zugänglich ist. Die Kammerelemente (132, 133) sind napfförmig ausgebildet, sodass die Isolierkammer (131) in der Geschlossenstellung topfförmige Gestalt aufweist. Der axiallineare Verschiebweg der wenigstens zwei Kammerelemente (132, 133) der Isolierkammer (131) ist derart dimensioniert, dass eine lichte Maulweitenöffnung freigegeben wird die mindestens einer Reifenbreite entspricht.

Um die wenigstens zwei Kammerelemente (132, 133) relativ zueinander verschiebbar zu realisieren, ist zumindest eine der Kammerelemente (132. 133) axialbeweglich angeordnet und über eine Verfahreinrichtung (140) innerhalb der Vorrichtung zur Nachbehandlung von Reifen (100) axialverschiebbar. Auch ist es möglich, dass die Konstruktion wenigstens beide Kammerelemente (132, 133) über eine gemeinsame oder jeweils separate Verfahreinrichtungen (140) axialbeweglich ausführt. Die Verschiebungsbewegung ist vorzugsweise linear und axial oder achsparallel zur erfindungsgemäßen Vorrichtung zur Nachbehandlung von Reifen (100).

Die wenigstens eine Verfahreinrichtung (140) kann auf verschiedene Weise realisiert sein. Insbesondere ist daran gedacht, die Verfahreinrichtung für ein erstes Kammerelement (132) und, oder ein zweites Kammerelement (133) auf der Mittenachse der Vorrichtung zur Nachbehandlung von Reifen (100) anzuordnen und als doppeltwirkenden Verfahrzylinder mit integrierter Linearführung oder lineargeführter Kolbenstange auf pneumatischer, elektrischer oder hydraulischer Funktionsweise basierend aufzubauen.

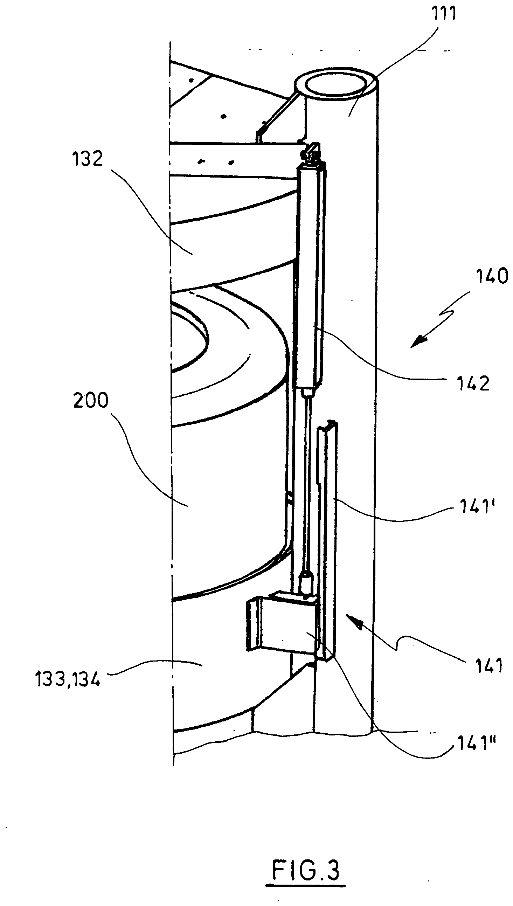

Alternativ oder zusätzlich kann die Verfahreinrichtung (140) wie in Figur 3 dargestellt achsparallel aussermittig der Vorrichtung zur Nachbehandlung von Reifen (100) angeordnet sein. Diese Ausführungsform der Verfahreinrichtung (140) kann pro Kammerelement (132, 133, 134) wenigsten einmal vorgesehen sein und verfügt über wenigstens zwei Verfahreinrichtungskomponenten (141, 142) übereinstimmend mit den zwei funktionalen Aufgaben.

Die erste Komponente besteht in einer Linearführung (141) zur Realisierung der der Führungsfunktion. Eine Führungsschiene (141') ist zu diesem Zweck vorzugsweise an einer Säule (111) festgelegt, dessen Führungsprofil mit einer Kulisse (141") in verschiebbarer Weise zusammenwirkt und die einwirkenden Kräfte aufnimmt und abstützt. Ein Linearantrieb (142) basierend auf pneumatischer, elektrischer oder hydraulischer Funktionsweise erfüllt die funktionale Anforderung die Verschiebekräfte längs des Verschiebweges einzuleiten und stellt die zweite Komponente der Verfahreinrichtung (140) dar.

Wenigstens eine der Verfahreinrichtungen (140) angeordnet auf der Mittenachse und/oder achsparallel der Vorrichtung zur Nachbehandlung von Reifen (100) unterstützen auf diese Weise die axiale Verschiebbarkeit der wenigstens zwei Kammerelemente (132, 133) zueinander, sodass der Kammerinnenraum für ein Beladen oder Entladen mit wenigstens einem Reifen (200) freigebbar ist. Wird der jeweilige Verschiebehub maximal ausgenutzt befinden sich die Kammerelemente (132, 133) in der Geöffnetstellung bzw. in der Geschlossenstellung.

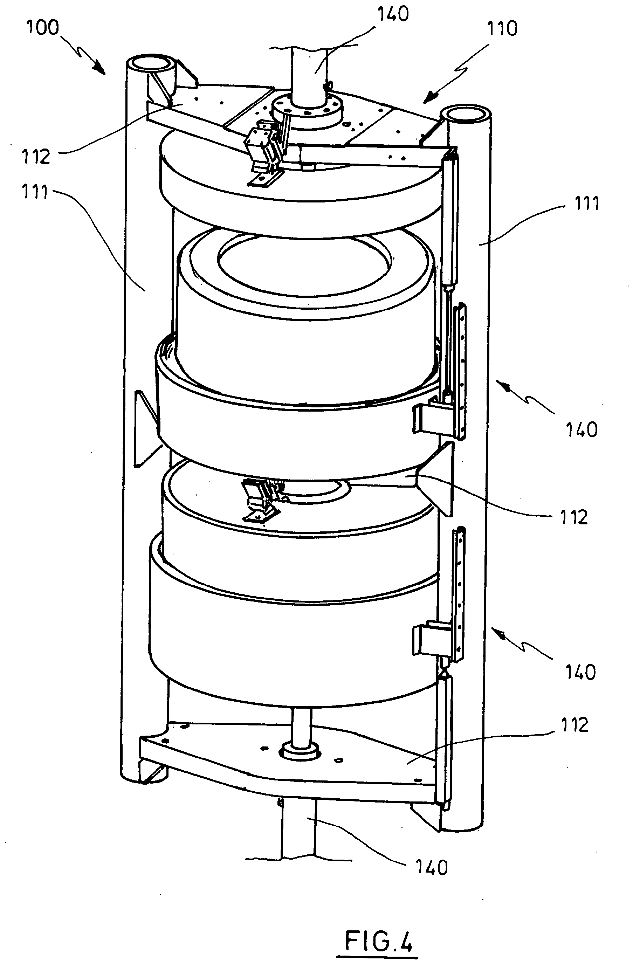

Figur 4 zeigt das Ausführungsbeispiel der erfindungsgemäßen Vorrichtung zur Nachbehandlung von Reifen (100) mit zwei PCI (120) und zwei PCD (130), wobei die jeweils enthaltenen Isolierkammer (131) zur Aufnahme wenigstens eines Reifens im oberen Fall geöffnet und im unteren Fall geschlossen ist. Der Rahmen (110) ist in diesem Beispiel aus zwei Säulen (111) mit insgesamt drei Traversen (112) gebildet, PCI (120) und PCD (130) als funktionelle Einheiten sind axial in Serie angeordnet und können so zwei Heizzyklen lang die Reifennachbehandlungsschritte durchführen. Die untere oder gegebenenfalls obere Kammer nimmt dann den jeweils nächsten Reifen auf, der aus der Reifenvulkanisiermaschine (Heizpresse) kommt.

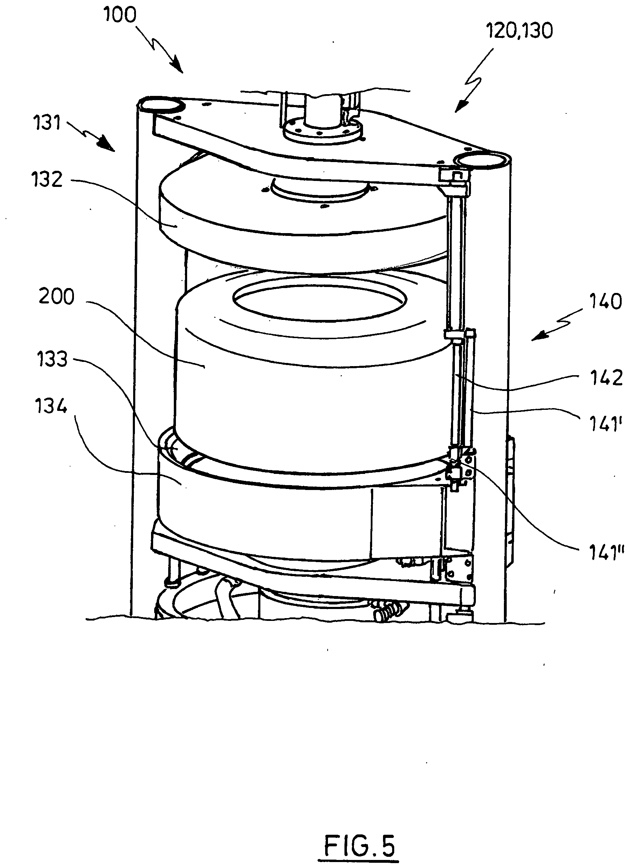

Figur 5 illustriert in perspektivischer Ansicht auf die Vorrichtung zur Nachbehandlung von Reifen die Geöffnetsituation der Isolierkammer (131) des PCD (130) mit einem Fertigreifen (200). Der Fertigreifen (200) ist dabei in einer Schwebestellung dargestellt, d.h. es ist die Situation im Moment des Beladens oder des Entladens gezeigt, wobei auf die Darstellung der Handhabungseinrichtung zum Be- oder Entladen der Isolierkammer (131) verzichtet wurde.

In dem in Figur 5 gezeigten Ausführungsbeispiel ist die Isolierkammer (131) bestehend aus drei Kammerelementen (132, 133, 134) gezeigt. Ein erstes Kammerelement (132) und ein zweites Kammerelement (133) bilden hier das Ober- und Unterteil, ein drittes Kammerelement (134) ist als zum ersten und zweiten Kammerelement (132, 133) konzentrischer Ringabschnitt ausgeführt. wenigstens zwei der drei Kammerelemente (132, 133, 134) sind über eine oder mehrere Verfahreinrichtungen (140) linearaxial verschiebbar, sodass eine Geöffnetstellung und eine Geschlossenstellung der Isolierkammer (131) eingenommen werden kann.

Der Vorteil dieser Kammergestaltung durch drei Kammerelemente (132, 133, 134) liegt in der Dreiteilung der vorzugsweise zylindrischen Kammerseitenwand. Infolge dieser konstruktiven Ausgestaltung ist es möglich, die lichte Öffnungsweite durch einen erheblich kleineren Verfahrweg des ersten Kammerelementes (132) und des zweiten Kammerelementes (133) relativ zueinander zu erreichen und auf diese Weise die Bauhöhe der gesamten Vorrichtung oder von Teilen davon zu reduzieren. Maßgeblich für den Betrag der Reduzierung des Verfahrweges bzw. der Vorrichtungsbauhöhe ist die Ringbreite des dritten Kammerelementes (134).

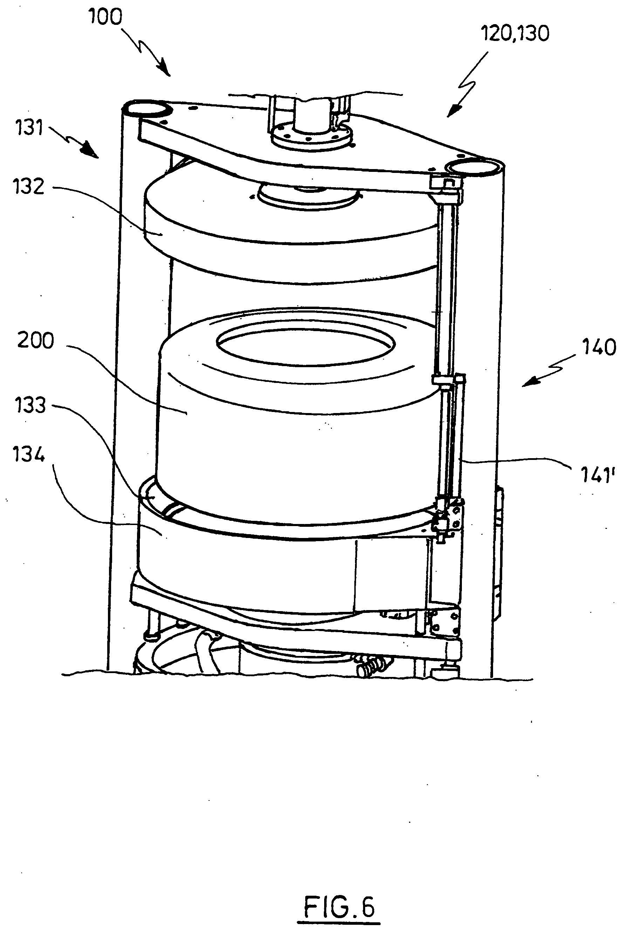

Figur 6 illustriert die Situation analog zu Figur 5 mit einem in der Kammer (131) abgelegten Fertigreifen (200).

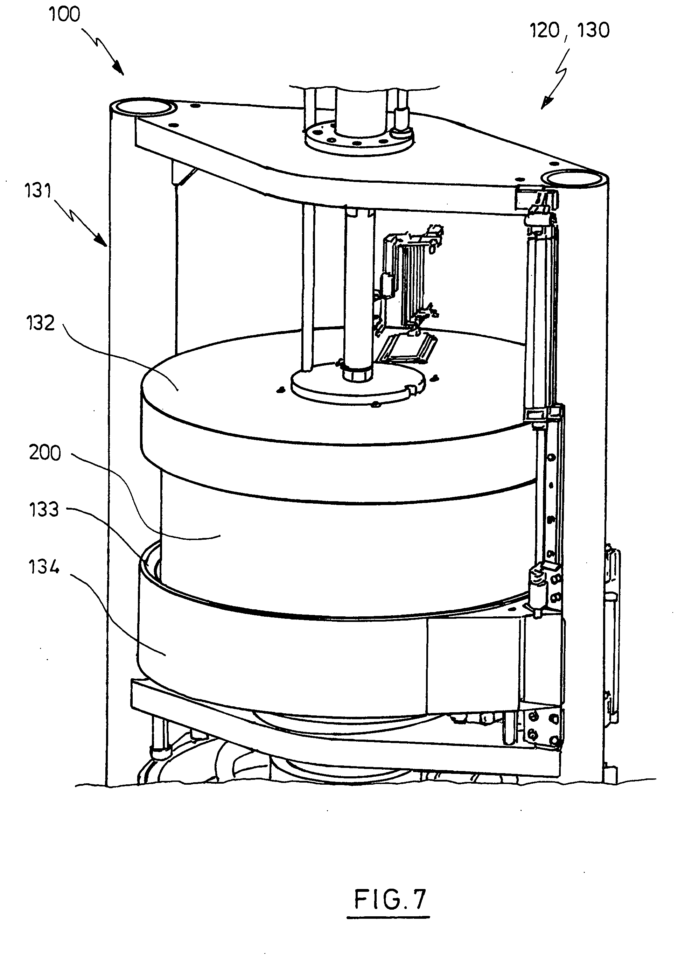

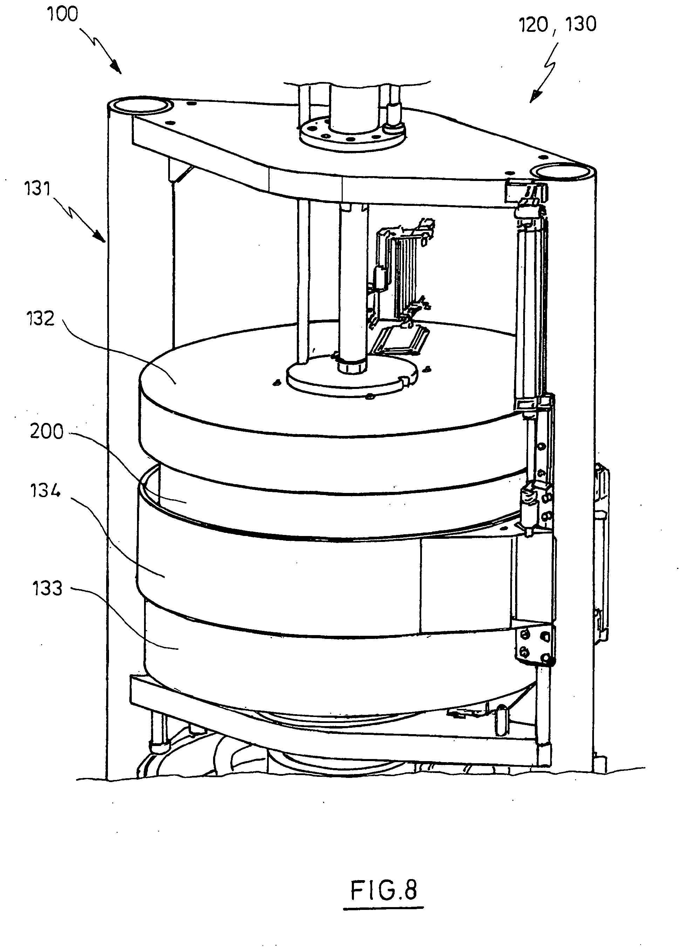

Figur 7 bildet die Position des abgesenkten ersten Kammerelementes (132) ab und zeigt auf diese Weise die Isolierkammer (131) im teilweise geschlossenen Zustand. Figur 8 zeigt das dritte Kammerelement (134) in einer gegenüber Figur 7 teilweise verschobenen Position in Richtung der Geschlossenstellung der Isolierkammer (131).

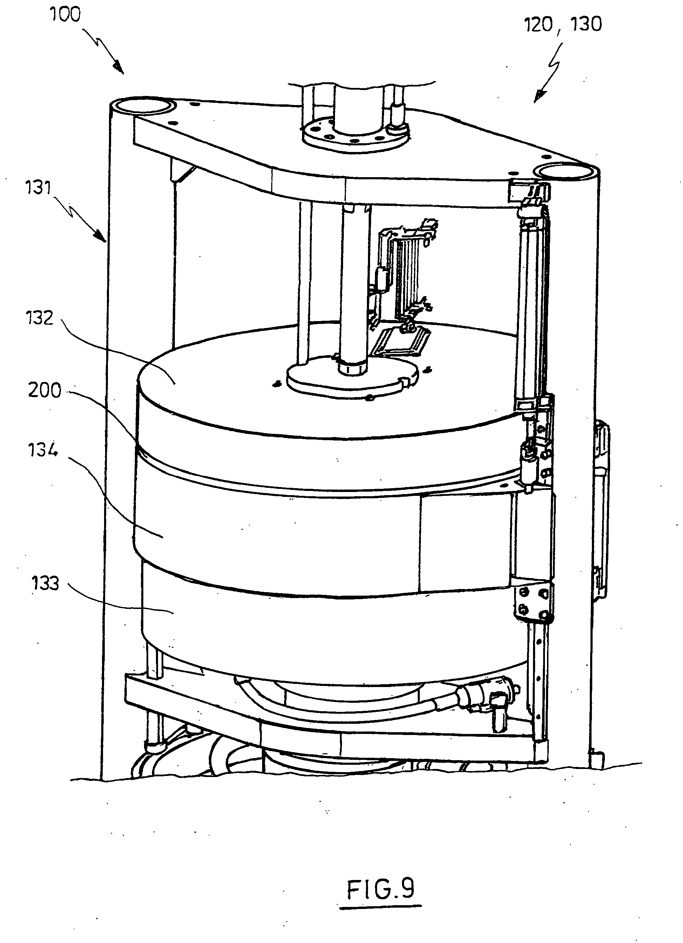

Figur 9 umfasst in perspektivischer Ansicht die obere Vorrichtung zur Nachbehandlung von Reifen (100) in der Geschlossenstellung der Isolierkammer (131) des PCD. In dieser Anordnungs- und Positionssituation unterstützt die Vorrichtung zur Nachbehandlung von Reifen (100) insbesondere den erfindungsgemäßen Schritt 1 der langsamen Abkühlung des restwärmebehafteten Fertigreifens (200) innerhalb der isolierten Kammer (131), wobei die in diesem Prozessschritt vorzunehmende Temperaturreduzierung vorzugsweise als gesteuerte bzw. kontrollierte Abkühlung des restwärmebehafteten Fertigreifens (200) auf ein niedrigeres Temperaturniveau, beispielsweise Tzw oder Tu, Tr realisiert wird.

Um diesen ersten Schritt der langsamen Abkühlung zu verwirklichen, schafft die den Fertigreifen (200) umgebende isolierte Kammer (131) insbesondere ein Klima ohne störende Einflüsse einer Umgebungslufttemperatur und/oder der Luftgeschwindigkeit aus der Umgebung. Je nach geforderten Isolationseigenschaften und/oder der erforderlichen Abkühlungsrate können die Isolierkammer (131) und die Kammerelemente (132, 133, 134) in ihren Isolationswirkungen ausgebildet sein.

Beispielsweise sind verschiedene Werkstoffe mit unterschiedlichen Isolationseigenschaften wie Eisen- oder Nichteisenmetalle, Kunststoffe und insbesondere Hochtemperaturkunststoffe, Kompositmaterial, Karbonwerkstoffe oder faserdotierte Aluminiumlegierungen vorgesehen.

Weiterhin ist es erfindungsgemäß möglich, konstruktiv auf die Isolations- und, oder Wärmetransporteigenschaften einzuwirken, beispielsweise durch einen doppelwandigen Kammeraufbau mit innenliegendem Isolationsmaterial oder einer Kühlmittelzirkulation innerhalb der Doppelwandungen. Insbesondere ein auf diese Weise erwärmtes Kühlmittel kann die Energieeffizienz unterstützen dadurch, dass es für Vorwärmungszwecke verwendet oder einem Wärmetauscher zugeführt wird.

Eine andere Möglichkeit zur Beeinflussung des Klimas innerhalb der Isolierkammer (131) besteht in der gesteuerten Erwärmung der Kammerwandungen beispielsweise durch eine Widerstandsheizung oder die Zufuhr von temperiertem Kühlmittel bei doppelwandiger Kammerausführung.

Wie vorstehend bereits erläutert, besteht ein wesentliches erfindungsgemäßes Merkmal darin, dass die Verwendung eines PCI mit einer Druckbeaufschlagung des Reifeninnenraumes mit Stützgas kombiniert wird.

Ein weiteres wesentliches erfindungsgemäßes Merkmal besteht darin, dass die Abkühlung des Reifens vom ersten Temperaturniveau zum zweiten Temperaturniveau innerhalb eines Zeitraumes von genau zwei Heizzyklen der Reifenvulkanisiermaschine erfolgt.

## Patentansprüche

1. Vorrichtung zur Nachbehandlung von Reifen (100) nach einem Vulkanisierungsprozess, aufweisend wenigstens einen PCI (120) zur Druckbeaufschlagung des Reifeninnenraums mit Stützgas während einer Reifenabkühlphase, wobei der wenigstens eine PCI (120) zumindest teilweise von einem PCD (130) umgeben ist, **dadurch gekennzeichnet, dass** das PCD (130) wenigstens eine Isolierkammer (131) zur Aufnahme wenigstens eines Reifens (200) aufweist und dass die Isolierkammer (131) konstruktiv erzeugte Isolationseigenschaften durch einen doppelwandigen Aufbau aufweist, sodass eine langsame Abkühlung des Reifens (200) von einem ersten auf ein zweites Temperaturniveau unterstützt ist, und dass die Isolierkammer (131) in ihrem Innenraum temperierbar ist dadurch, dass innerhalb der Doppelwandung ein Temperiermedium zirkulierbar eingebracht werden kann.

2. Vorrichtung zur Nachbehandlung von Reifen (100) nach Anspruch 1, **dadurch gekennzeichnet, dass** die Isolierkammer (131) des PCD (130) wenigstens teilweise aus einem isolierenden Werkstoff gebildet ist, sodass eine langsame Abkühlung des Reifens (200) von einem ersten auf ein zweites Temperaturniveau unterstützt ist.

3. Vorrichtung zur Nachbehandlung von Reifen (100) nach Anspruch 2, **dadurch gekennzeichnet, dass** der isolierende Werkstoff Eisen- oder Nichteisenmetall, Kunststoff, insbesondere Hochtemperaturkunststoff, Kompositmaterial, Karbonwerkstoff oder faser-dotierte Aluminiumlegierung aufweist, sodass eine langsame Abkühlung des Reifens (200) von einem ersten auf ein zweites Temperaturniveau unterstützt ist.

4. Vorrichtung zur Nachbehandlung von Reifen (100) nach Anspruch 1, **dadurch gekennzeichnet, dass** die Isolierkammer (131) durch wenigstens ein erstes Kammerelement (132) und ein zweites Kammerelement (133) gebildet ist.

5. Vorrichtung zur Nachbehandlung von Reifen (100) nach Anspruch 4, **dadurch gekennzeichnet, dass** die Isolierkammer (131) ein drittes Kammerelement (134) aufweist, deren geometrische Form einem zylindrischen Ringabschnitt entspricht.

6. Vorrichtung zur Nachbehandlung von Reifen (100) nach Anspruch 4, **dadurch gekennzeichnet, dass** wenigstens ein Kammerelement (132, 133, 134) relativ zu wenigstens einem anderen Kammerelement verschiebbar ist, sodass die Isolierkammer (131) in eine Geöffnetstellung oder eine Geschlossenstellung gebracht werden kann.

7. Vorrichtung zur Nachbehandlung von Reifen (100) nach Anspruch 6, **dadurch gekennzeichnet, dass** die Isolierkammer (131) in der Geöffnetstellung eine lichte Maulweitenöffnung freigibt, die wenigstens eine Reifenbreite entspricht.

8. Vorrichtung zur Nachbehandlung von Reifen (100) nach Anspruch 5, **dadurch gekennzeichnet, dass** das dritte Kammerelement (134) verschiebbar ist, sodass eine reduzierter Bewegungsraumhöhe für die Verschiebung der Kammerelemente (132, 133, 134) zwischen einer Geöffnetstellung und einer Geschlossenstellung der Isolierkammer (131) unterstützt ist.

9. Vorrichtung zur Nachbehandlung von Reifen (100) nach Anspruch 6 oder 8, **dadurch gekennzeichnet, dass** die Bewegungsbahn zur Verschiebung wenigstens eines Kammerelementes (132, 133, 134) vorzugsweise linear und achsparallel oder achskongruent zur Mittenachse der Vorrichtung zur Nachbehandlung von Reifen (100) ist.

10. Vorrichtung zur Nachbehandlung von Reifen (100) nach Anspruch 6, **dadurch gekennzeichnet, dass** die Verschiebbarkeit wenigstens eines Kammerelementes (132, 133, 134) durch wenigstens eine Verfahreinrichtung (140) realisiert ist.

11. Vorrichtung zur Nachbehandlung von Reifen (100) nach Anspruch10, **dadurch gekennzeichnet, dass** die Verfahreinrichtung (140) zur Verschiebung wenigstens eines Kammerelementes (132, 133, 134) zwei Verfahreinrichtungskomponenten (141, 142) aufweist, wobei eine Komponente die Führungsfunktion und eine Komponente die Verfahrfunktion längs eines Weges realisiert.

12. Vorrichtung zur Nachbehandlung von Reifen (100) nach Anspruch 1, **dadurch gekennzeichnet, dass** der Grundaufbau durch wenigstens einen Rahmen (110) aufweisend wenigstens eine Säule (111) und einen Ausleger (112) zur Halterung von wenigstens einem PCI (120) und PCD (130) gebildet ist.

13. Verfahren zur Nachbehandlung von Reifen (200) mit einem Restwärmegehalt nach einem Vulkanisationsprozess aufweisend die Schritte
a. Einbringen wenigstens eines restwärmebehafteten Reifens (200) in eine Isolierkammer (131) eines PCD (130) einer Vorrichtung zur Nachbehandlung von Reifen (100) nach einem der Ansprüche 1 bis 12, wobei
b. innerhalb der Isolierkammer (131) des PCD (130) ein von Außeneinflüssen unabhängiges Klima einstellbar ist, sodass eine langsame Abkühlung des Reifens (200) von einem ersten auf ein zweites Temperaturniveau unterstützt ist.

14. Verfahren zur Nachbehandlung von Reifen (200) nach Anspruch 13, **dadurch gekennzeichnet, dass** additiv zu Schritt b. im Rahmen eines PCI-Prozessschrittes
c. eine Druckbeaufschlagung des Reifeninnenraums mit Stützgas erfolgt.

15. Verfahren zur Nachbehandlung von Reifen (200) nach Anspruch 13, **dadurch gekennzeichnet, dass** eine langsame Abkühlung des Reifens (200) vorzugsweise von einem ersten Temperaturniveau, das der Reifenrestwärmetemperatur Trest entspricht auf ein zweites Temperaturniveau, dass der Umgebungstemperatur Tu, Tr entspricht, erfolgt.

16. Verfahren zur Nachbehandlung von Reifen (200) nach Anspruch 13, **dadurch gekennzeichnet, dass** eine langsame Abkühlung des Reifens (200) vorzugsweise von einem ersten Temperaturniveau, das der Reifenrestwärmetemperatur Trest entspricht auf ein zweites Temperaturniveau, dass einer Zwischentemperatur Tzw entspricht und gefolgt von einer normalen oder Zwangskühlung von Zwischentemperaturniveau Tzw auf Umgebungstemperaturniveau Tu, Tr erfolgt.

17. Verfahren zur Nachbehandlung von Reifen (200) nach Anspruch 13, **dadurch gekennzeichnet, dass** die langsame Abkühlung des Reifens (200) von einem ersten Temperaturniveau auf ein zweites Temperaturniveau vorzugsweise in einem Zeitraum von zwei Heizzyklen einer Reifenvulkanisiermaschine erfolgt.

18. Verfahren zur Nachbehandlung von Reifen (200) nach Anspruch 16, **dadurch gekennzeichnet, dass** die normale oder Zwangskühlung des Reifens (200) von einem Zwischentemperaturniveau Tzw auf Raumtemperaturniveau Tu, Tr vorzugsweise in einem Zeitraum von wenigstens einem Heizzyklus einer Reifenvulkanisiermaschine erfolgt.

## Claims

1. Device for post-treating tyres (100) after a vulcanization process, having at least one PCI (120) for pressurizing the tyre interior with support gas during a tyre cooling phase, wherein the at least one PCI (120) is at least partially surrounded by a PCD (130), **characterized in that** the PCD (130) has at least one insulating chamber (131) for accommodating at least one tyre (200) and **in that** the insulating chamber (131) has structurally produced insulating properties by virtue of a double-walled construction, thus ensuring that slow cooling of the tyre (200) from a first to a second temperature level is supported, and **in that** the insulating chamber (131) can be temperature-controlled in the interior thereof by virtue of the fact that a temperature control medium can be introduced within the double wall in a manner which allows it to circulate.

2. Device for post-treating tyres (100) according to Claim 1, **characterized in that** the insulating chamber (131) of the PCD (130) is formed at least partially from an insulating material, thus ensuring that slow cooling of the tyre (200) from a first to a second temperature level is supported.

3. Device for post-treating tyres (100) according to Claim 2, **characterized in that** the insulating material comprises ferrous or nonferrous metal, plastic, in particular high-temperature plastic, composite material, carbon material or fiber-doped aluminium alloy, thus ensuring that slow cooling of the tyre (200) from a first to a second temperature level is supported.

4. Device for post-treating tyres (100) according to Claim 1, **characterized in that** the insulating chamber (131) is formed by at least one first chamber element (132) and one second chamber element (133).

5. Device for post-treating tyres (100) according to Claim 4, **characterized in that** the insulating chamber (131) has a third chamber element (134), the geometrical shape of which corresponds to a cylindrical ring segment.

6. Device for post-treating tyres (100) according to Claim 4, **characterized in that** at least one chamber element (132, 133, 134) is movable relative to at least one other chamber element, thus allowing the insulating chamber (131) to be moved into an open position or a closed position.

7. Device for post-treating tyres (100) according to Claim 6, **characterized in that** the insulating chamber (131) has a clear aperture width which corresponds to at least a tyre width in the open position.

8. Device for post-treating tyres (100) according to Claim 5, **characterized in that** the third chamber element (134) is movable, and, as a result, reduced vertical motion height for the movement of the chamber elements (132, 133, 134) between an open position and a closed position of the insulating chamber (131) is supported.

9. Device for post-treating tyres (100) according to Claim 6 or 8, **characterized in that** the motion path for the movement of at least one chamber element (132, 133, 134) is preferably linear and axially parallel or axially congruent with respect to the central axis of the device for post-treating tyres (100).

10. Device for post-treating tyres (100) according to Claim 6, **characterized in that** the movability of at least one chamber element (132, 133, 134) is achieved by means of at least one movement device (140).

11. Device for post-treating tyres (100) according to Claim 10, **characterized in that** the movement device (140) for moving at least one chamber element (132, 133, 134) has two movement device components (141, 142), wherein one component performs the guiding function and one component provides the movement function along a path.

12. Device for post-treating tyres (100) according to Claim 1, **characterized in that** the basic construction is formed by at least one frame (110) having at least one column (111) and a bracket (112) for holding at least one PCI (120) and PCD (130).

13. Method for post-treating tyres (200) containing residual heat after a vulcanization process, having the following steps:
a. introducing at least one tyre (200) containing residual heat into an insulating chamber (131) of a PCD (130) of a device for post-treating tyres (100) according to one of Claims 1 to 12, wherein
b. a climate independent of external influences can be set within the insulating chamber (131) of the PCD (130), thus ensuring that slow cooling of the tyre (200) from a first to a second temperature level is supported.

14. Method for post-treating tyres (200) according to Claim 13, **characterized in that**
c. the tyre interior is pressurized with support gas in addition to step b. as part of a PCI process step.

15. Method for post-treating tyres (200) according to Claim 13, **characterized in that** slow cooling of the tyre (200) preferably takes place from a first temperature level, which corresponds to the residual temperature of the tyre Trest, to a second temperature level, which corresponds to the ambient temperature Tu, Tr.

16. Method for post-treating tyres (200) according to Claim 13, **characterized in that** slow cooling of the tyre (200) preferably takes place from a first temperature level, which corresponds to the residual temperature of the tyre Trest, to a second temperature level, which corresponds to an intermediate temperature Tzw, followed by normal or forced cooling from the intermediate temperature level Tzw to the ambient temperature level Tu, Tr.

17. Method for post-treating tyres (200) according to Claim 13, **characterized in that** slow cooling of the tyre (200) from a first temperature level to a second temperature level preferably takes place in a time period of two heating cycles of a tyre vulcanizing machine.

18. Method for post-treating tyres (200) according to Claim 16, **characterized in that** the normal or forced cooling of the tyre (200) from an intermediate temperature level Tzw to room temperature level Tu, Tr preferably takes place in a time period of at least one heating cycle of a tyre vulcanizing machine.

## Revendications

1. Dispositif de post-traitement de pneus (100) après un processus de vulcanisation, comprenant au moins un PCI (120) pour la sollicitation en pression de l'espace intérieur de pneu avec un gaz auxiliaire pendant une phase de refroidissement de pneu, l'au moins un PCI (120) étant au moins partiellement entouré par un PCD (130), **caractérisé en ce que** le PCD (130) comprend au moins une chambre d'isolation (131) pour la réception d'au moins un pneu (200), et **en ce que** la chambre d'isolation (131) présente des propriétés d'isolation produites par construction par une structure à double paroi, de telle sorte qu'un refroidissement lent du pneu (200) d'un premier à un deuxième niveau de température est favorisé, et **en ce que** la chambre d'isolation (131) est conditionnable en température dans son espace intérieur, par le fait qu'un milieu de conditionnement en température peut être introduit de manière à pouvoir circuler à l'intérieur de la double paroi.

2. Dispositif de post-traitement de pneus (100) selon la revendication 1, **caractérisé en ce que** la chambre d'isolation (131) du PCD (130) est au moins partiellement formée en un matériau isolant, de telle sorte qu'un refroidissement lent du pneu (200) d'un premier à un deuxième niveau de température est favorisé.

3. Dispositif de post-traitement de pneus (100) selon la revendication 2, **caractérisé en ce que** le matériau isolant comprend un métal ferreux ou non ferreux, une matière plastique, notamment une matière plastique haute température, un matériau composite, une matière carbonée ou un alliage d'aluminium doté de fibres, de telle sorte qu'un refroidissement lent du pneu (200) d'un premier à un deuxième niveau de température est favorisé.

4. Dispositif de post-traitement de pneus (100) selon la revendication 1, **caractérisé en ce que** la chambre d'isolation (131) est formée par au moins un premier élément de chambre (132) et un deuxième élément de chambre (133).

5. Dispositif de post-traitement de pneus (100) selon la revendication 4, **caractérisé en ce que** la chambre d'isolation (131) comprend un troisième élément de chambre (134), dont la forme géométrique correspond à une section annulaire cylindrique.

6. Dispositif de post-traitement de pneus (100) selon la revendication 4, **caractérisé en ce qu'**au moins un élément de chambre (132, 133, 134) est coulissable par rapport à au moins un autre élément de chambre, de telle sorte que la chambre d'isolation (131) peut être mise dans une position ouverte ou dans une position fermée.

7. Dispositif de post-traitement de pneus (100) selon la revendication 6, **caractérisé en ce que** la chambre d'isolation (131) dégage dans la position ouverte une ouverture de mâchoire intérieure qui correspond au moins à une largeur de pneu.

8. Dispositif de post-traitement de pneus (100) selon la revendication 5, **caractérisé en ce que** le troisième élément de chambre (134) est coulissable, de telle sorte qu'une hauteur de mouvement réduite pour le coulissement des éléments de chambre (132, 133, 134) entre une position ouverte et une position fermée de la chambre d'isolation (131) est favorisée.

9. Dispositif de post-traitement de pneus (100) selon la revendication 6 ou 8, **caractérisé en ce que** la trajectoire de mouvement pour le coulissement d'au moins un élément de chambre (132, 133, 134) est de préférence linéaire et parallèle à l'axe médian ou congruente à l'axe médian du dispositif de post-traitement de pneus (100).

10. Dispositif de post-traitement de pneus (100) selon la revendication 6, **caractérisé en ce que** la possibilité de coulissement d'au moins un élément de chambre (132, 133, 134) est réalisée par au moins un appareil de déplacement (140).

11. Dispositif de post-traitement de pneus (100) selon la revendication 10, **caractérisé en ce que** l'appareil de déplacement (140) pour le coulissement d'au moins un élément de chambre (132, 133, 134) comprend deux composants d'appareil de déplacement (141, 142), un composant réalisant la fonction de guidage et un composant réalisant la fonction de déplacement le long d'un chemin.

12. Dispositif de post-traitement de pneus (100) selon la revendication 1, **caractérisé en ce que** la structure de base est formée par au moins un cadre (110) comprenant au moins une colonne (111) et une console (112) pour le support d'au moins un PCI (120) et PCD (130) .

13. Procédé de post-traitement de pneus (200) ayant une teneur en chaleur résiduelle après un processus de vulcanisation, comprenant les étapes suivantes :
a. l'introduction d'au moins un pneu chargé de chaleur résiduelle (200) dans une chambre d'isolation (131) d'un PCD (130) d'un dispositif de post-traitement de pneus (100) selon l'une quelconque des revendications 1 à 12,
b. un climat indépendant des effets extérieurs pouvant être ajusté à l'intérieur de la chambre d'isolation (131) du PCD (130), de telle sorte qu'un refroidissement lent du pneu (200) d'un premier à un deuxième niveau de température est favorisé.

14. Procédé de post-traitement de pneus (200) selon la revendication 13, **caractérisé en ce qu'**en plus de l'étape b., dans le cadre d'une étape de processus de PCI
c. une sollicitation en pression de l'espace intérieur de pneu a lieu avec un gaz auxiliaire.

15. Procédé de post-traitement de pneus (200) selon la revendication 13, **caractérisé en ce qu'**un refroidissement lent du pneu (200) de préférence d'un premier niveau de température, qui correspond à la température de chaleur résiduelle du pneu Trest, à un deuxième niveau de température, qui correspond à la température ambiante Tu, Tr, a lieu.

16. Procédé de post-traitement de pneus (200) selon la revendication 13, **caractérisé en ce qu'**un refroidissement lent du pneu (200) de préférence d'un premier niveau de température, qui correspond à la température de chaleur résiduelle du pneu Trest, à un deuxième niveau de température, qui correspond à une température intermédiaire Tzw, a lieu et est suivi par un refroidissement normal ou forcé du niveau de température intermédiaire Tzw au niveau de température ambiante Tu, Tr.

17. Procédé de post-traitement de pneus (200) selon la revendication 13, **caractérisé en ce que** le refroidissement lent du pneu (200) d'un premier niveau de température à un deuxième niveau de température a de préférence lieu dans une période de temps de deux cycles de chauffage d'une machine de vulcanisation de pneus.

18. Procédé de post-traitement de pneus (200) selon la revendication 16, **caractérisé en ce que** le refroidissement normal ou forcé du pneu (200) d'un niveau de température intermédiaire Tzw au niveau de température ambiante Tu, Tr a de préférence lieu dans une période de temps d'au moins un cycle de chauffage d'une machine de vulcanisation de pneus.
